# EUROPEAN PATENT SPECIFICATION

(11) **EP 2 158 889 B1**
(45) Date of publication and mention of the grant of the patent: **16.05.2012**
(21) Application number: 09168549.5
(22) Date of filing: 25.08.2009
(51) Int. Cl.: A61G 5/10

(54) **Pin release assembly**
Stiftausrückanordnung
Assemblage de libération de broche

(30) Priority: 26.08.2008 US 91870 P
(43) Date of publication of application: 03.03.2010
(73) Proprietor: Sunrise Medical HHG Inc., Longmont, Colorado 80503 (US)
(72) Inventor: Hart, Harlan, Madera, CA 93636 (US)
(74) Representative: Weber-Bruls, Dorothée

(56) References cited:
- US-A- 1 427 253
- US-A1- 2006 137 942
- US-B1- 6 561 524

## Description

### BACKGROUND OF THE INVENTION

This invention relates to latch mechanisms used to securely latch one member in relation to another member so as to prevent relative movement between the members. More particularly, this invention relates to a latch mechanism to secure a first wheelchair component, such as a reclining seat, relative to a second wheelchair component, such as a frame member.

Wheelchairs are a class of personal mobility vehicle that provide greater ambulatory freedom to persons having limited movement abilities. Wheelchairs are often provided with relatively moveable components. Some wheelchair components such as, for example, articulating frame members are relatively moveable in order to fold and unfold the wheelchair for greater ambulatory freedom. When the frame members are moved to an unfolded or use position, the components are often locked relative to each other with one or more latch mechanisms.

By way of another example, some wheelchairs have seats with fixed orientations relative to the supporting frame members. To increase user comfort, some wheelchairs have seats that can be reclined or otherwise pivoted to provide an adjustable attitude relative to the frame members. These adjustable seats can be locked into a desired position by one or more latch mechanism.

An example of a latch mechanism utilizing a type of pin release structure is disclosed in United States Patent Publication Number 2006/0137942 to Counts. The latch mechanism described therein utilizes a helical groove in a stationary lock stub to create a helical path. A lock lever includes a cooperating pin that follows the helical path in the lock stub. A locking pin is fixed to the lock lever. The latch pin selectively secures one component (i.e., a moveable component) that is moveable relative to another component (i.e., a stationary component). When the lock lever is moved, the pin follows the helical path in the lock stub. An axial component of movement generated by the helical path causes the lock lever and the attached latch pin to retract from the moveable component to permit relative movement. Conversely, the lock lever axially moves to extend the latch pin into the moveable structure to prevent movement. The axial movement of the lock lever requires some type of added flexibility or additional degree of freedom of movement in the connection between the lock lever and a latch actuator to accommodate the axial translation of the lever and actuator connection. These flexible connections may be a cable or other jointed and sliding arrangement. These connections, however, may be prone to wear, breakage, or increased costs. Thus, an improved and more adaptable latch mechanism would be desirable.

US 1,427,253 discloses a bolt fastener that consists of a keeper, a bolt, a barrel and a housing or casing for the bolt or barrel. The housing is substantially rectangular in cross-section, and slidable in the outer end of the housing is a bolt having a cylindrical shank at its inner end provided with a radially disposed stud. Rotatable in the inner end of the housing is the barrel. The outer end of the barrel has a bore to receive the bolt shank, and the walls of the bore have a spiral slot to receive the stud of the bolt shank. If the barrel is oscillated within the housing, the bolt will be shifted longitudinally of the housing. This is due to the walls of the spiral slot riding against the stud, and since the bolt is held against rotation by the housing, it is obvious that the bolt must shift longitudinally of the housing when the barrel is oscillated. The inner end of the housing has a transverse slot and the marginal edges of the slot are rounded or stiffened by bending the material of the housing on itself, and these bent edges of the housing will afford a substantial bearing for a crank or handle. By swinging the crank or handle from one side of the housing to the other, the barrel may be oscillated, and the bolt retracted or extended relative to the housing.

### SUMMARY OF THE INVENTION

This invention relates to a latch assembly as defined in claim 1.

The invention also relates to a wheelchair including at least one latch assembly according to the invention.

Various aspects of this invention will become apparent to those skilled in the art from the following detailed description of the preferred embodiment, when read in light of the accompanying drawings.

### BRIEF DESCRIPTION OF THE DRAWINGS

Fig. 1A is an exploded view of a releasable pin latch assembly.
Fig. 1B is an enlarged view, in cross section of another embodiment of a releasable pin latch mechanism, similar to Fig. 1A.
Fig. 1C is a perspective view, in cross section, of another embodiment of a releasable latch pin, similar to Fig. 1A.
Fig. 2 is a partially exploded view of plural releasable pin latch assemblies and a linkage.
Fig. 3 is a perspective view of a wheelchair.
Fig. 4 is an enlarged perspective view of a portion of the wheelchair of Fig. 3 with plural pin release assemblies and a linkage for operating the pin release assemblies.
Fig. 5 is an enlarged sectional view of a portion of the releasable pin latch assembly and linkage, in cross section, in an engaged relationship with the portion of the wheelchair of Fig. 4.
Fig. 6 is a perspective view of plural pin release assemblies, a linkage, and an actuator rod and cable for operating the pin release assemblies.

### DETAILED DESCRIPTION OF THE PREFERRED EMBODIMENT

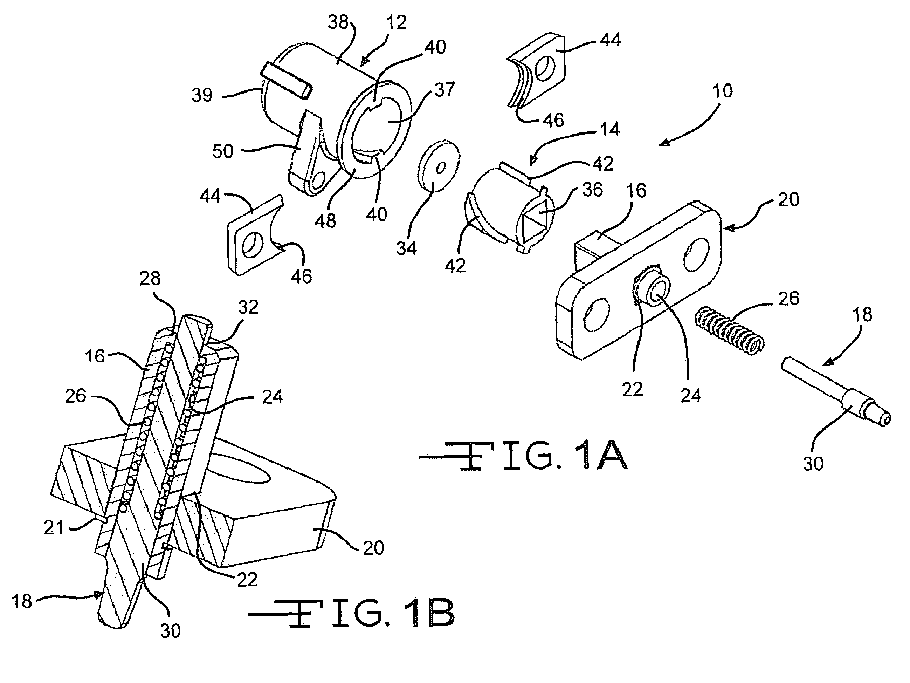

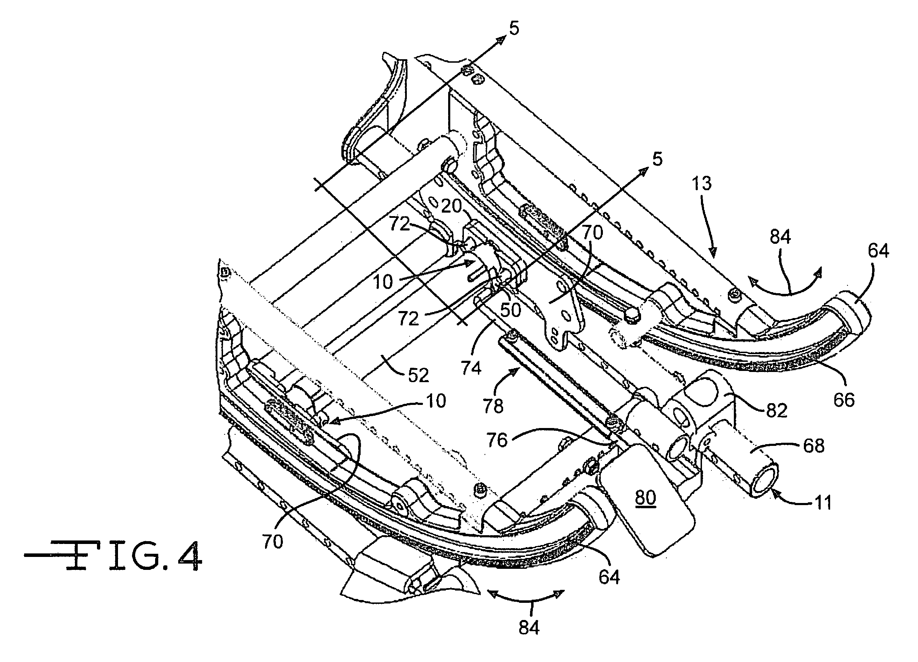

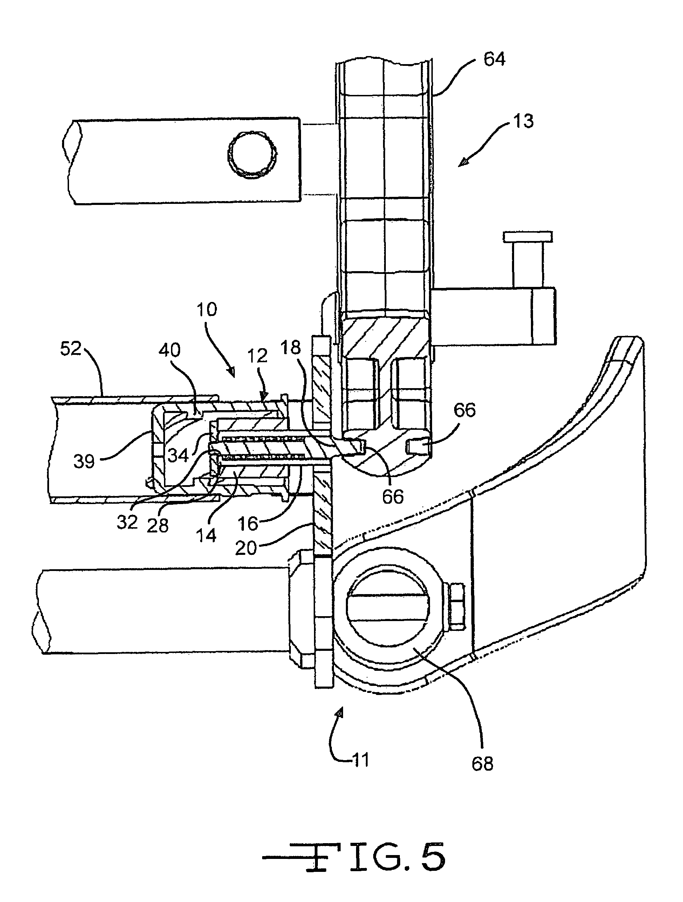

Referring now to the drawings, there is illustrated in Fig. 1A a latch assembly, generally indicated at 10, having a releasable pin structure. The latch assembly 10 is used to securely latch a first member 11 in relation to a second member 13 so as to prevent movement of the members in relation to one another, as shown in Figs. 4 and 5. There are many possible uses for the latch assembly 10, including, for example, use as a rocker pin release, a wheel or hub lock, a center of gravity adjustment latch, a reclining backrest positioning latch, an angle adjustable backrest positioning latch, a battery access cover latch, an armrest attachment latch, a seat adjustment latch, a lift or tilt lockout, an adjustable leg rest latch, a headrest adjustment or removal latch, a stabilizer bar latch, and a tray table adjustment or removal latch. While this list is illustrative of possible uses of the latch assembly 10, it is not exhaustive.

The latch assembly 10 of Fig. 1A comprises an outer housing 12 that is subject to rotational movement, an inner spool 14 that is subject to axial movement in relation to the outer housing 12, a pin housing 16 supporting the inner spool 14 for relative axial movement, and a latch pin 18 that is subject to axial movement in relation to the pin housing 16. The outer housing 12 may be mounted in a fixed relationship to a supporting structure, such as the first member 11, by a mounting plate 20. The fixed axial relationship between the outer housing 12 and the first member 11, or the mounting plate 20, permits use of actuating devices that may be rigid or not generally accommodating of additional degrees of flexibility at the outer housing to actuator connection point, as will be described in detail below. As the outer housing 12 is rotated, the outer housing 12 causes the inner spool 14 to move axially relative to the pin housing 16 and the outer housing 12. In turn, the axial movement of the inner spool 14 causes axial movement of the latch pin 18, which is connected to the inner spool 14. As shown in Fig. 5, the latch pin 18 cooperates with an aperture, or other engagement structure, associated with the second member 13. When the latch pin 18 engages the aperture, the position of the first member 11 is selectively fixed in relation to the second member 13 so as to prevent relative movement therebetween.

The mounting plate 20 may be mounted in a fixed relationship to the first member 11 (i.e., the supporting structure) in any suitable manner. In the embodiment shown in Fig. 4, the mounting plate 20 is attached to the first member 11 by bolts, for example, or by way of any fasteners. In an alternative embodiment, the mounting plate 20 may be integrally formed with a portion of the first member 11, if desired. The pin housing 16 is held in a fixed relationship to the mounting plate 20. This may be accomplished in any suitable manner. In the embodiment of the latch assembly 10 illustrated in Fig. 1A, the pin housing 16 is press fit into an opening 22 in the mounting plate 20. As shown in another embodiment of Fig. 1B, the pin housing 16 may be held in place within the mounting plate 20 by a retainer, such as a snap ring 21. Alternatively, the pin housing 16 may be integrally formed with the mounting plate 20, if desired. The opening 22 cooperates with the pin housing 16 to prevent relative movement of the pin housing 16 with the mounting plate 20. The pin housing 16 is constrained from movement, in relation to the opening 22. The pin housing 16 has a geometric profile and the opening 22 has a geometric profile that cooperates with the geometric feature of the pin housing 16. As illustrated in Figs. 1A and 1B, the opening 22 may be square in shape and the pin housing 16 may have a square shaped outer portion that cooperates with the square shaped opening 22, though such a shape is not required. The cooperating geometric profiles of the outer surface of the pin housing 16 and the opening 22 may be any shape, relative fit (i.e., a press-fit), or mated thread forms that prevent relative movement between the mounting plate 20 and the pin housing 16.

- The pin housing 16 has an elongated, axial bore 24 that is sized to receive the latch pin 18, as shown in Fig. 1B. A resilient member, such as a coil spring 26 as shown in Fig. 1B, is carried by the latch pin 18 and captured within the pin housing 16. This can be accomplished in any suitable manner. Additionally, the coil spring 26 may be any type of resilient member. Furthermore, the resilient member may be partially mounted on the exterior of the pin housing 16 or mounted away from the pin housing 16 and need not be carried by the latch pin 18. In the illustrated latch assembly 10, the pin housing 16 has a shoulder 28 that extends radially inward at a first end of the pin housing 16. The latch pin 18 has a shoulder 30 that extends radially outward at a first end of the latch pin 18. The coil spring 26 is captured in the pin housing 16 between the shoulders 28, 30. The latch pin 18 passes through an opening 32 (shown in Figs. 1B and 5) defined by the shoulder 28 at the first end of the pin housing 16. The shoulder 28 confines one end of the coil spring 26 within the pin housing 16. Passage of the latch pin 18 is restricted through the pin housing 16 by compression of the coil spring 26 between the shoulders 28, 30. A second end of the latch pin 18, opposite the first end, cooperates with a retainer or stop member 34 so that the stop member 34 is held in a fixed relationship to the second end of the latch pin 18. In the illustrated latch assembly 10, the stop member 34 is a washer having a female threaded opening that is threadably engaged by a male threaded portion at the second end of the latch pin 18. However, the stop member 34 may be attached to the latch pin 18 in any releasable or permanent manner. The stop member 34 transfers the axial motion of the inner spool 14 to the latch pin 18, when the outer housing 12 is rotated. The stop member 34 also limits the travel of the latch pin 18 through the pin housing 16, and thus captures the latch pin 18.

The inner spool 14 has a passage 36 formed therethrough for receiving the pin housing 16. The passage 36 cooperates with the pin housing 16 so that the inner spool 14 does not rotate in relation to the pin housing 16 yet is permitted to move axially relative to the pin housing 16. As shown in Figs. 1A and 5, the passage 36 formed through the inner spool 14 has a feature (e.g., a geometric profile) that cooperates with the feature of the pin housing 16. The passage 36 may be square in shape to cooperate with the square shaped portion of the pin housing 16, though any other geometric profile that allows the inner spool 14 to slide relative to the pin housing 16 may be used.

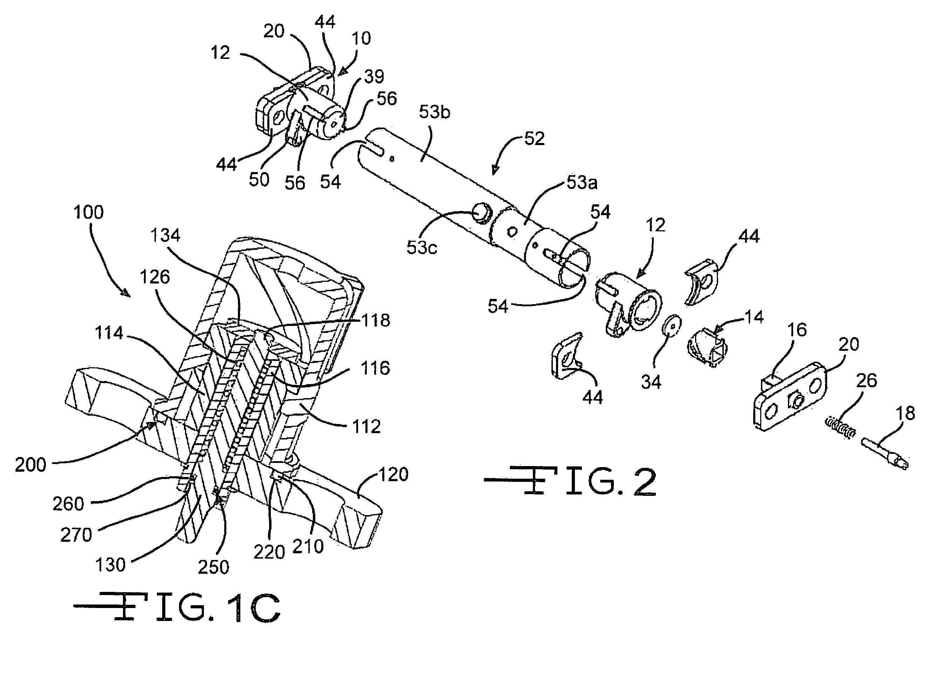

The outer housing 12 may be a cup shaped housing having a cylindrical outer wall 38 defining an inner bore 37 of the outer housing 12. An end wall 39, as shown in Figs. 2 and 5, extends radially inward from the cylindrical outer wall 38 at one end of the outer housing 12. The end wall 39 may be integrally formed with the outer housing 12 or may be a separate part that is attached thereto. The cylindrical outer wall 38 has a helical feature 40 that extends radially into the inner bore 37 and cooperates with a helical feature 42 about the periphery of the inner spool 14. Alternatively, the helical feature 40 of the outer housing 12 may be a recess projecting into the outer wall 38. In such an arrangement, the inner spool 14 may have a projection (not shown) that extends into the recessed helical feature; and in this arrangement, the actuation of the inner spool 14 by the outer housing 12 remains substantially the same as will be described. The helical feature 40 of the outer housing drives against the mating helical feature 42 of the inner spool 14 as the outer housing 12 is rotated. As the mating helical features 40, 42 slide relative to each other, the inner spool 14 is moved axially relative to the pin housing 16. The inner spool 14 is prevented from rotating relative to the outer housing by way of engagement of the passage 36 with the pin housing 16. The latch pin 18 is retracted into the pin housing 16 by way of the axial movement of the inner spool 14 acting against the stop member 34. The coil spring 26 is compressed between the shoulders 28 and 30. The latch pin 18 may be permitted to re-extend from the pin housing 16 by the resultant tensile forces created by the coil spring 26 acting between the shoulders 28 and 30. Alternatively, the latch pin 18 may be extended from the pin housing 16 by an actuated rotation of the outer housing 12 in the opposite direction. The outer housing 12 is held in fixed axial relation to the mounting plate 20 by radial guides 44. The radial guides 44 may take on any suitable form. In the illustrated latch assembly 10, the guides 44 are in the form of a pair of spaced apart ears defining arcuate channels 46. The outer housing 12 has a peripheral flange 48 that extends radially outward from the outer housing 12 opposite the end wall 39. The channels 46 are sized and configured to receive a flange 48: Alternatively, the peripheral flange 48 may be a groove formed into the outer wall 38 and the channels 46 may be arcuate flanges that engage the groove. The guides 44 are held in fixed relation to the mounting plate 20 in a manner whereby the peripheral flange 48 is held for rotational movement in relation to the channels 46. The guides 44 and the peripheral flange 48 may be positioned at other locations along the outer housing 12, if desired. Alternatively, the radial guides may be a snap ring (not shown), similar to snap ring 21, that retains the flange 48 within a counterbore (not shown) formed in the mounting plate 20. As described above, the rotation of the outer housing 12 functions to cause axial movement of the inner spool 14 in relation to the pin housing 16. This in turn causes axial movement of the latch pin 18.

The fixed axial relationship of the outer housing 12 to the mounting plate 20 provides an actuation mechanism of the latch assembly 10 that is also adaptable to being sealed. The sealing mechanism provides resistance against contaminant intrusion and retention of lubricants. Referring now to Fig. 1C, there is illustrated another embodiment of a latch assembly, shown generally at 100, which is similar in construction and operation to the embodiments of the latch assembly 10 described herein. Furthermore, any alternative constructions or embodiments described herein are applicable, in whole or in part, to this or any other embodiment described herein. The latch assembly 100 includes an outer housing 112, an inner spool 114, a pin housing 116, a latch pin 118, and a mounting plate 120. The latch pin 118 includes a shoulder 130. The latch pin 118 is shown carrying a coil spring 126 and is also fixed to a stop member 134.

The latch assembly 100 includes a first sealing mechanism, shown generally at 200, that is positioned between the mounting plate 120 and the outer housing 112. The first sealing mechanism 200 is illustrative of one type of seal structure and may be positioned other than shown and remain within the scope of the present invention. For example, the sealing mechanism 200 may be formed as part of the outer housing 112 or may be an external sealing mechanism that seals on exterior surfaces of the mounting plate 120 and the outer housing 112. The first sealing mechanism 200 includes a sealing element 210 and an annular seal housing 220. The sealing element 210 may be an "O"-ring, a rubber lip seal, a gasket, or any packing that inhibits entry of external contaminants and provides lubricant retention. The annular seal housing 220 is shown as an annular groove formed into the mounting plate 120. Alternatively, the seal housing 220 may be formed into the outer housing 112 or may be a "U"-shaped, metal ring with a sealing element engaged therein that seals on the exterior of the outer housing 112 and the mounting plate 120.

The latch assembly 100 includes a second sealing mechanism, shown generally at 250, that is positioned between the pin housing 116 and the latch pin 118. In the illustrated embodiment, the second sealing mechanism 250 includes a sealing element 260 and an annular seal housing 270. The sealing element 260 may be an "O"-ring, a rubber lip seal, a gasket, or any packing that inhibits entry of external contaminants and provides lubricant retention. The annular seal housing 270 is shown as an annular groove formed into the shoulder 130 of the latch pin 118. Alternatively, the seal housing 270 may be formed into the pin housing 116 or may be a "U"-shaped, metal ring with a sealing element that engages the end of the pin housing 116 and seals against a portion of the shoulder 130 that may project beyond the end of the pin housing 116.

Referring again to Fig. 1A, the outer housing 12 further has a mounting member 50 for operatively attaching an actuator such as, for example, an actuator rod or cable. Alternatively, the actuator may be any mechanism capable of moving the outer housing 12 relative to the inner spool 14, such as an electric motor, solenoid, pneumatic piston/cylinder, and the like. In the illustrated latch assembly 10, the mounting member 50 is in the form of a tab having an opening therethrough for receiving the end of an actuator. Movement of the actuator causes rotational movement of the outer housing 12, which causes axial movement of the inner spool 12 and the latch pin 12.

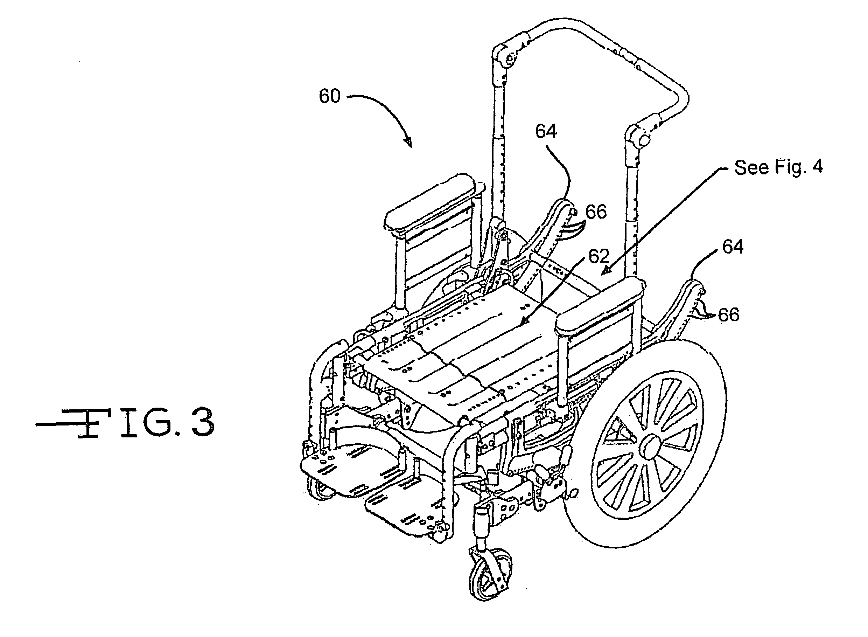

As shown in Figs. 2 and 4, plural latch assemblies 10 may be simultaneously controlled by a linkage, such as a lateral linkage 52. In one embodiment, the lateral linkage 52 may have cooperating first and second sections 53a and 53b that are length adjustable. The first and second sections 53a and 53b may be connected together in any suitable manner such as, for example, by fastener 53c, though such is not required. Alternatively, the first and second sections 53a and 53b may cooperate by way of mating torque transmitting shapes such that one member can rotationally drive the other member. In another embodiment, the lateral linkage 52 is a unitary linkage. The outer housing 12 of each latch assembly 10 is keyed to cooperate with the linkage 52. This can be accomplished in any suitable manner. For example, the linkage 52 may be provided with an axial slot 54 at opposing ends of the linkage 52. The cylindrical outer wall 38 of the outer housing 12 of each latch assembly 10 may be provided with a projection 56 that is sized and configured to fit in the axial slots 54 in the ends of the linkage 52. Alternatively, the axial slots 54 and mating projections 56 may be any torque transmitting structure or shape such as, for example, spline teeth; square, hexagonal, triangular, and the like features. The attachment of the outer housing 12 plural latches 10 to the linkage 52 may be releasable or permanent. Rotation of the linkage 52 in turn causes rotation of each outer housing 12, which causes axial movement of the inner spool 12 and the latch pin 12 of each respective latch assembly 10. Also, rotation of the first latch assembly 10 may cause rotation of the linkage 52 which will rotate the second latch assembly 10. Alternatively, each of the outer housings 12 may be threaded onto or permanently attached to the respective first and second sections 53a and 53b. The latch assembly 10 may be mounted to the first member 11, such as a frame 68 of the wheelchair 60 shown in Fig. 3, and may be used as a rocker pin release, wherein the latch pin 18 is used for latching in place a reclining or tilting seat assembly 62, such as a center of gravity tilt in space seat assembly. The seat assembly 62 is supported for movement along a pair of laterally spaced arcuate shaped rockers 64 in order to tilt the seat assembly 62. The latch pin 18 can be selectively engaged with one of a plurality of apertures 66 spaced along the rockers 64. An example of such a wheelchair 60 is disclosed in U.S. Patent No. 7,007,965, issued to Todd Bernatsky on March 7, 2006, and Patent Application Publication No. 2005/0116444 A1, published June 2, 2005.

Referring now to Figs. 4 and 5, the latch assembly 10 is supported in relation to the wheelchair frame 68. The latch pin 18 is biased (i.e., to the right when viewing Figs. 4 and 5) into engagement with an aperture 66 in a rocker 64 via the coil spring 26 to fix the relative position of the rocker 64 and thus the seat assembly 62 to the frame 68. Rotation of the outer housing 12 moves the inner spool 14 and the latch pin 18 axially (i.e., to the left when viewing Figs. 4 and 5), thus disengaging the latch pin 18 from the aperture 66 and allowing the rocker 64 and the seat assembly 62 thereby to move. Alternatively, the latch pin 18 may be biased in an unlatched position relative to the aperture 66 in the rocker 64. In such a configuration, the shoulder 28 may be positioned at the opposite end of the pin housing 16 and the shoulder 30 may be positioned at the opposite end of the latch pin 18, with coil spring 26 disposed therebetween. The stop member 34 would be formed integral with or fixed to the inner spool 14. As stated above, plural latch assemblies 10 can be operated simultaneously via operation of a linkage 52 connected to the latch assemblies 10.

One of the plural latch assemblies 10, or a single latch assembly 10, is shown in Fig. 5. Each latch assembly 10 is mounted in relation to the wheelchair frame 68. This may be accomplished in any suitable manner. The illustrated latch assemblies 10 of

Fig. 4 are mounted in relation to the wheelchair frame 68 via carriage mounting plates 70, which each supports a carriage assembly (not shown) that supports the rocker 64 for movement. The latch assemblies 10 are mounted in relation to the carriage mounting plates 70 via the mounting plates 20, for example, by cap screws 72, or other suitable fasteners, that cooperate with the carriage mounting plates 70. The latch assemblies 10 are cooperatively connected by the aforementioned linkage 52. An actuator rod 74 is mounted to the outer housing 12 of each latch assembly 10 by the mounting member 50. However, the actuator rod 74 may be mounted to only one mounting member 50, if desired. The actuator rod 74 is connected to a second actuator rod 76 in an offset manner by a link 78 coupled therebetween, though such an arrangement is not required. The second actuator rod 76 is operatively connected in relation to a pedal 80, which is mounted for pivotal movement in relation to the wheelchair frame 68.

The actuator rods 74, 76 are adjustable in relation to the link 78 to permit the overall length of the rods 74, 76 and link 78 to be adjusted. For example, the position of the carriage mounting plates 70 may be adjusted fore and aft in relation to the frame 68. This will change the relative position of the assemblies 10 in relation to the pedal 80. The link 78 permits an adjustment in the overall length of the rods 74, 76 and link 78 to accommodate for this change. Moreover, if the pedal 80 is supported in relation to an axle support 82, as shown in Fig. 4, a change in the position of the axle support 82 will result in a change in the relative positions of the latch assemblies 10 and the pedal 80. Again, an adjustment in the overall length of the rods 74, 76 and link 78 would accommodate this change.

The actuator rods 74, 76 and link 78 are moved by depressing the pedal 80. Movement of the actuator rods 74, 76 and link 78 causes rotation of one of the outer housings 12 (i.e., to the right when viewing Fig. 5). This rotational movement is translated to the other outer housing 12 (i.e., to the left when viewing Fig. 5) via the lateral linkage 52. As stated above, the rotational movement axially moves the inner spool 14 and thus causes the latch pin 18 to disengage from the aperture 66. Releasing the latch pin 18 from the aperture 66 allows the rocker 64 to move along a line 84 shown in Fig. 4. Upon releasing the pedal 80, the latch pin 18 engages one of the apertures 66 to fix the rocker 64 in position relative to the frame 68.

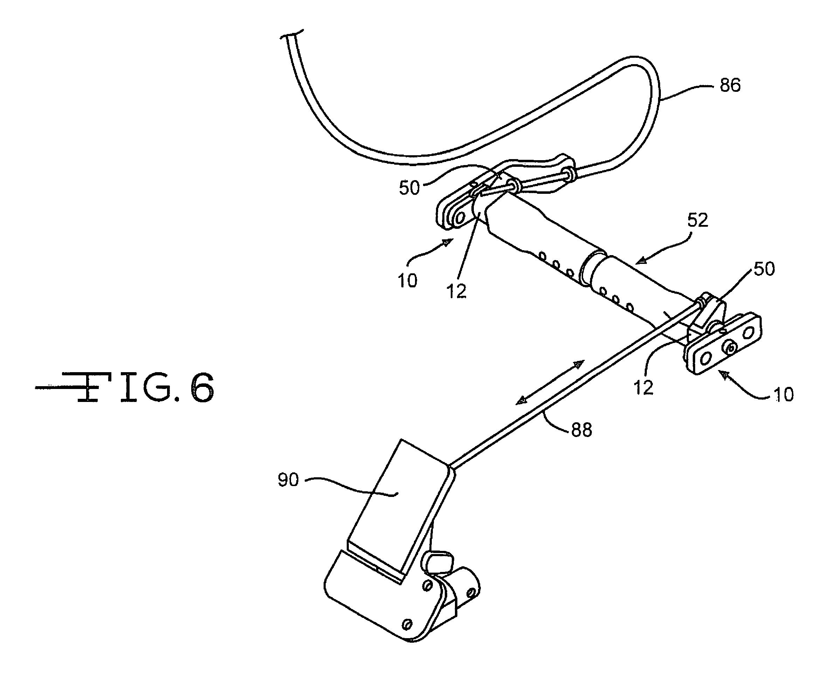

It should be appreciated that the latch assemblies 10 may also be operated by an actuator cable 86, as shown in Fig. 6. The actuator cable 86 may be used in the place of an actuator rod or in conjunction with an actuator rod 88, as shown. The actuator cable 86 may be operated via a conventional lever (not shown), while the rod 88 may be operated by a pedal 90. It should be appreciated that rotation of the outer housing 12 of either latch assembly 10, caused by operation of either the cable 86 or the rod 88, can be translated to the outer housing 12 of the other latch assembly 10 by the linkage 52.

It should be appreciated that throughout operation of the latch assemblies 10, there is generally no axial movement of the outer housing 12. This permits a pulling mechanism (i.e., the actuator) connected to the mounting member 50 to maintain its alignment.

The principle and mode of operation of this invention have been explained and illustrated in its preferred embodiment. However, it must be understood that this invention may be practiced otherwise than as specifically explained and illustrated without departing from its scope.

## Claims

1. A latch assembly (10) comprising an outer housing (12) that is supported for rotation, an inner spool (14) operatively connected to the outer housing (12) and a latch pin (18) configured for selective axial movement,
wherein the outer housing (12) is constrained against axial movement and the inner spool (14) is supported for axial movement in relation to the outer housing (12) such that rotation of the outer housing (12) axially moves the inner spool (14), the inner spool (14) being operatively connected to the latch pin (18) for selective axial projection and retraction thereof,
wherein the latch assembly includes a pin housing (16) having a geometric profile, the latch pin (18) being subject to axial movement in relation to the pin housing (16), **characterised in that** the inner spool (14) includes a passage (36) defining a geometric profile that cooperates with the pin housing (16) having the geometric profile such that the inner spool moves axially relative to the pin housing in response to the rotation of the outer housing.

2. The latch assembly (10) of claim 1 wherein the outer housing (12) includes an inner bore (37) having a helical feature (40), the inner spool (14) being supported within the inner bore (37) and further including a helical feature (42) that cooperates with the helical feature (40) of the outer housing (12) to axially move the inner spool.

3. The latch assembly of claim 1 wherein the latch assembly (10) includes a mounting plate (20) that is adapted to attach the latch assembly to a first member (11), the outer housing (12) includes a flange (48) that cooperates with the mounting plate (20) to constrain against axial movement of the outer housing.

4. The latch assembly (10) of any of the preceding claims, further including a coil spring (260, wherein the latch pin (18) responds to an axial force created by the coil spring (26).

5. The latch assembly (10) of claim 4 wherein the coil spring (26) biases the latch pin (18) into an extended position.

6. The latch assembly (10) of claim 5 wherein a stop member (34) is fixed to the latch pin (18) such that axial movement of the inner spool (14) is transferred to the latch pin (18).

7. The latch assembly (10, 100) of claim 1 wherein a first sealing mechanism (200) engages the outer housing 12 and the mounting plate (20, 120) and a second sealing mechanism (25) engages the pin housing (16, 116) and the latch pin (18, 1 18), the first and second seal mechanisms (200, 250) further configured to either prevent contaminant intrusion, retain lubricant, or both.

8. The latch assembly (10) of claim 1 wherein a first latch assembly (10) is operatively connected by a lateral linkage (52) to a second latch assembly (10) to form plural latch assemblies.

9. The latch assembly (10) of claim 8 wherein the outer housing (12) includes a mounting member (50) and an actuator rod (76, 90) engages the mounting member for selective rotation of the outer housing (12).

10. The latch assembly (10) of claim 8 wherein the lateral linkage (52) comprises a first section (53a) and a second section (53b) that are length adjustable.

11. The latch assembly (10) of claim 1 wherein the latch pin (18) selectively fixes a first member (11) of a wheelchair (60) relative to a second member (13) of the wheelchair (60).

12. The latch assembly (10) of claim 11 wherein the first member (11) is a wheelchair frame (68) and the second member is a tilting seat assembly (62)

13. The latch assembly (10) of claim 11 wherein the first member (11) is a wheelchair frame (68) and the second member is a hub lock.

14. Wheelchair including at least one latch assembly (10) according to any one of the preceding claims.

## Patentansprüche

1. Verriegelungsanordnung (10), umfassend ein drehbar gelagertes äußeres Gehäuse (12), einen mit dem äußeren Gehäuse (12) wirkverbundenen inneren Schieber (14) und einen Verriegelungsstift (18), der zur selektiven axialen Bewegung konfiguriert ist,
wobei das äußere Gehäuse (12) gegenüber axialer Bewegung eingeschränkt ist und der innere Schieber (14) in Bezug auf das äußere Gehäuse (12) axial bewegbar gelagert ist, sodass eine Rotation des äußeren Gehäuses (12) den inneren Schieber (14) axial bewegt, wobei der innere Schieber (14) mit dem Verriegelungsstift (18) zum selektiven axialen Ein- oder Ausfahren desselben wirkverbunden ist,
wobei die Verriegelungsanordnung ein Stiftgehäuse (16) mit einem geometrischen Profil umfasst, wobei der Verriegelungsstift (18) axialer Bewegung in Bezug auf das Stiftgehäuse (16) unterliegt, **dadurch gekennzeichnet, dass** der innere Schieber (14) einen Durchgang (36) mit einem geometrischen Profil umfasst, das mit dem Stiftgehäuse (16) mit dem geometrischen Profil so zusammenwirkt, dass sich der innere Schieber als Reaktion auf die Rotation des äußeren Gehäuses axial in Bezug auf das Stiftgehäuse bewegt.

2. Verriegelungsanordnung (10) nach Anspruch 1, wobei das äußere Gehäuse (12) eine Innenbohrung (37) mit einem schraubenförmigen Merkmal (40) umfasst, wobei der innere Schieber (14) innerhalb der Innenbohrung (37) gelagert ist und ferner ein schraubenförmiges Merkmal (42) umfasst, das mit dem schraubenförmigen Merkmal (40) des äußeren Gehäuses (12) zusammenwirkt, um den inneren Schieber axial zu bewegen.

3. Verriegelungsanordnung nach Anspruch 1, wobei die Verriegelungsanordnung (10) eine Befestigungsplatte (20) umfasst, die geeignet ist, um die Verriegelungsanordnung an einem ersten Glied (11) zu befestigen, wobei das äußere Gehäuse (12) eine Wulst (48) umfasst, die mit der Befestigungsplatte (20) zusammenwirkt, um eine axiale Bewegung des äußeren Gehäuses einzuschränken.

4. Verriegelungsanordnung (10) nach einem der vorherigen Ansprüche, ferner umfassend eine Spiralfeder (260), wobei der Verriegelungsstift (18) auf eine durch die Spiralfeder (26) erzeugte axiale Kraft reagiert.

5. Verriegelungsanordnung (10) nach Anspruch 4, wobei die Spiralfeder (26) den Verriegelungsstift (18) in eine Ausfahrposition spannt.

6. Verriegelungsanordnung (10) nach Anspruch 5, wobei am Verriegelungsstift (18) ein Anschlagglied (34) befestigt ist, sodass eine axiale Bewegung des inneren Schiebers (14) auf den Verriegelungsstift (18) übertragen wird.

7. Verriegelungsanordnung (10, 100) nach Anspruch 1, wobei ein erster Dichtungsmechanismus (200) am äußeren Gehäuse (12) und an der Befestigungsplatte (20, 120) angreift und wobei ein zweiter Dichtungsmechanismus (25) am Stiftgehäuse (16, 116) und am Verriegelungsstift (18, 118) angreift, wobei der erste und der zweite Dichtungsmechanismus (200, 250) ferner so gestaltet sind, dass sie das Eindringen von Fremdkörpern verhindern und/oder Schmiermittel halten.

8. Verriegelungsanordnung (10) nach Anspruch 1, wobei eine erste Verriegelungsanordnung (10) durch eine seitliche Kopplung (52) mit einer zweiten Verriegelungsanordnung (10) wirkverbunden ist, um mehrere Verriegelungsanordnungen auszubilden.

9. Verriegelungsanordnung (10) nach Anspruch 8, wobei das äußere Gehäuse (12) ein Befestigungsglied (50) umfasst und wobei eine Stellstange (76, 90) zur selektiven Rotation des äußeren Gehäuses (12) am Befestigungsglied angreift.

10. Verriegelungsanordnung (10) nach Anspruch 8, wobei die seitliche Kopplung (52) einen ersten Abschnitt (53a) und einen zweiten Abschnitt (53b), die längenverstellbar sind, umfasst.

11. Verriegelungsanordnung (10) nach Anspruch 1, wobei der Verriegelungsstift (18) selektiv ein erstes Glied (11) eines Rollstuhls (60) in Bezug auf ein zweites Glied (13) des Rollstuhls (60) fixiert.

12. Verriegelungsanordnung (10) nach Anspruch 11, wobei das erste Glied (11) ein Rollstuhlrahmen (68) und das zweite Glied eine Klappsitzanordnung (62) ist.

13. Verriegelungsanordnung (10) nach Anspruch 11, wobei das erste Glied (11) ein Rollstuhlrahmen (68) und das zweite Glied eine Nabensicherung ist.

14. Rollstuhl, umfassend mindestens eine Verriegelungsanordnung (10) nach einem der vorherigen Ansprüche.

## Revendications

1. Ensemble de verrou (10) comprenant un boîtier extérieur (12) qui est supporté en rotation, un tiroir intérieur (14) relié de manière opérationnelle au boîtier extérieur (12) et une tige de verrou (18) configurée pour avoir un déplacement axial sélectif, dans lequel le boîtier extérieur (12) est retenu vis à vis d'un déplacement axial et le tiroir intérieur (14) est supporté pour avoir un déplacement axial par rapport au boîtier extérieur (12) de sorte qu'une rotation du boîtier extérieur (12) déplace axialement le tiroir intérieur (14), le tiroir intérieur (14) étant relié de manière opérationnelle à la tige de verrou (18) pour sélectivement mettre en saillie et rétracter axialement celle-ci, dans lequel l'ensemble de verrou comprend un boîtier de tige (16) ayant un profil géométrique, la tige de verrou (18) étant soumise à un déplacement axial par rapport au boîtier de tige (16), **caractérisé en ce que** le tiroir intérieur (14) comprend un passage (36) définissant un profil géométrique qui coopère avec le boîtier de tige (16) ayant le profil géométrique de sorte que le tiroir intérieur se déplace axialement par rapport au boîtier de tige en réponse à la rotation du boîtier extérieur.

2. Ensemble de verrou (10) selon la revendication 1, dans lequel le boîtier extérieur (12) comprend un alésage intérieur (37) ayant une caractéristique hélicoïdale (40), le tiroir intérieur (14) étant supporté dans l'alésage intérieur (37) et comprenant de plus une caractéristique hélicoïdale (42) qui coopère avec la caractéristique hélicoïdale (40) du boîtier extérieur (12) pour déplacer axialement le tiroir intérieur.

3. Ensemble de verrou selon la revendication 1, dans lequel l'ensemble de verrou (10) comprend une plaque de montage (20) qui est adaptée pour fixer l'ensemble de verrou sur un premier élément (11), le boîtier extérieur (12) comprend un rebord (48) qui coopère avec la plaque de montage (20) pour retenir le déplacement axial du boîtier extérieur.

4. Ensemble de verrou (10) selon l'une quelconque des revendications précédentes, comprenant de plus un ressort hélicoïdal (260), dans lequel la tige de verrou (18) répond à une force axiale créée par le ressort hélicoïdal (26).

5. Ensemble de verrou (10) selon la revendication 4, dans lequel le ressort hélicoïdal (26) rappelle la tige de verrou (18) dans une position étendue.

6. Ensemble de verrou (10) selon la revendication 5, dans lequel un élément de butée (34) est fixé sur la tige de verrou (18) de sorte qu'un déplacement axial du tiroir intérieur (14) est transféré à la tige de verrou (18).

7. Ensemble de verrou (10, 100) selon la revendication 1, dans lequel un premier mécanisme d'étanchéité (200) coopère avec le boîtier extérieur (12) et la plaque de montage (20, 120) et un second mécanisme d'étanchéité (25) coopère avec le boîtier de tige (16, 116) et la tige de verrou (18, 118), les premier et second mécanismes d'étanchéité (200, 250) étant de plus configurés pour empêcher une intrusion de contaminants, retenir du lubrifiant, ou les deux.

8. Ensemble de verrou (10) selon la revendication 8, dans lequel un premier ensemble de verrou (10) est relié de manière opérationnelle par une liaison latérale (52) à un second ensemble de verrou (10) pour former plusieurs ensembles de verrou.

9. Ensemble de verrou (10) selon la revendication 8, dans lequel le boîtier extérieur (12) comprend un élément de montage (50) et une tige d'actionneur (76, 90) coopère avec l'élément de montage pour une rotation sélective du boîtier extérieur (12).

10. Ensemble de verrou (10) selon la revendication 8, dans lequel la liaison latérale (52) comprend un premier tronçon (53a) et un second tronçon (53b) qui ont une longueur ajustable.

11. Ensemble de verrou (10) selon la revendication 1, dans lequel la tige de verrou (18) fixe de manière sélective un premier élément (11) d'un fauteuil roulant (60) par rapport à un second élément (13) du fauteuil roulant (60).

12. Ensemble de verrou (10) selon la revendication 11, dans lequel le premier élément (11) est un châssis de fauteuil roulant (68) et le second élément est un ensemble de siège basculant (62).

13. Ensemble de verrou (10) selon la revendication 11, dans lequel le premier élément (11) est un châssis de fauteuil roulant (68) et le second élément est un verrou de moyeu.

14. Fauteuil roulant comprenant au moins un ensemble de verrou (10) selon l'une quelconque des revendications précédentes.
